# EUROPEAN PATENT APPLICATION

(11) **EP 4 386 491 A1**
(43) Date of publication of application: **19.06.2024**
(21) Application number: 22860486.4
(22) Date of filing: 23.08.2022
(51) Int. Cl.: G04G 17/00, G04G 9/00

(54) **METHOD FOR REDUCING POWER CONSUMPTION OF WEARABLE DEVICE, AND WEARABLE DEVICE**

(30) Priority: 25.08.2021 CN 202110984104
(71) Applicant: Huawei Technologies Co., Ltd., Shenzhen, Guangdong 518129 (CN)
(72) Inventor: YANG, Tingting, Shenzhen, Guangdong 518129 (CN)
(74) Representative: Huawei European IPR
(86) International application number: PCT/CN2022/114207
(87) International publication number: WO 2023/025140

(57) **Abstract**

A method for reducing power consumption of a wearable device and a wearable device are provided, and relate to the field of wearable devices. Power consumption of the wearable device can be reduced based on a use requirement of a user, and standby duration of the wearable device can be prolonged. The method is applied to the wearable device. The wearable device includes a main body and a bottom support configured to support the main body. The main body is rotatable relative to the bottom support. The method includes: detecting whether a front surface or a back surface of the main body of the wearable device faces upward. When it is detected that the front surface of the main body of the wearable device faces upward, the wearable device is in a normal working mode. When it is detected that the back surface of the main body faces upward, the wearable device enters a low power consumption mode. The low power consumption mode includes any one of a do-not-disturb mode, a power saving mode, and a user-defined mode.

## Description

This application claims priority to Chinese Patent Application No. 202110984104.0, filed with the China National Intellectual Property Administration on August 25, 2021 and entitled "METHOD FOR REDUCING POWER CONSUMPTION OF WEARABLE DEVICE AND WEARABLE DEVICE", which is incorporated herein by reference in its entirety.

### TECHNICAL FIELD

This application relates to the field of wearable devices, and in particular, to a method for reducing power consumption of a wearable device and a wearable device.

### BACKGROUND

Wearable devices such as smartwatches are favored by users due to portability and rich functions (such as workout monitoring, intelligent positioning, and voice call) of the wearable devices. However, because watch bodies of the smartwatches are limited in size, power of the smartwatches is often insufficient. How to reduce power consumption of smartwatches has become a research hotspot for device manufacturers.

### SUMMARY

This application provides a method for reducing power consumption of a wearable device and a wearable device. Power consumption of the wearable device can be reduced based on a use requirement of a user, and standby duration of the wearable device can be prolonged.

To achieve the foregoing objective, embodiments of this application provide the following technical solutions.

According to a first aspect, a method for reducing power consumption of a wearable device is provided. The method is applied to the wearable device. The wearable device includes a main body and a bottom support configured to support the main body, and the main body is rotatable relative to the bottom support. A first display screen is disposed on a front surface of the main body. A second display screen is disposed on a back surface of the main body. Power consumption caused when the first display screen displays an image is greater than power consumption caused when the second display screen displays an image. The method includes: detecting whether the front surface or the back surface of the main body of the wearable device faces upward. When a detection result is that the front surface of the main body of the wearable device faces upward, the wearable device controls the first display screen to display an image. When the detection result is that the back surface of the main body of the wearable device faces upward, the wearable device turns off the first display screen, and controls the second display screen to display an image.

It can be learned from the foregoing description that when the user finds that power of the wearable device (for example, a smartwatch) is insufficient, or when the user does not need to use the wearable device for a long period of time, or when the user actively wants to save the power, a watch body of the wearable device may be turned over, so that the back surface of the watch body faces upward (or the front surface faces downward), to control the smartwatch to enter a preset mode with low power consumption. In the preset mode with low power consumption, the wearable device may turn off the first display screen with high power consumption, and turn on the second display screen with low power consumption, to reduce the power consumption of the wearable device and prolong standby duration of the wearable device.

For example, the second display screen may be an LCD, for example, a TN-type LCD, an HTN-type LCD, an STN-type LCD, or an FSTN-type LCD. In some embodiments, the second display screen may be a segment display screen. A fixed position in the segment display screen has pixels, and only simple images, such as numbers, texts, and symbols, can be displayed at the fixed position. Alternatively, the second display screen may be a dot matrix screen. There are pixels arranged in an array in the dot matrix screen, and rich images may be displayed at any position. The dot matrix screen may have a small quantity of pixels. For example, the pixels may be less than or equal to 200. Using the foregoing two types of display screens can reduce power usage during display of the wearable device, thereby reducing the power consumption.

In a possible implementation, the method further includes: When the detection result is that the back surface of the main body of the wearable device faces upward, the wearable device further disables one or more of the following functions: a sound function, a push function, and a network heartbeat function.

It can be learned that, after entering the preset mode with low power consumption, the wearable device may further disable some unimportant functions, to further reduce the power consumption of the wearable device.

In a possible implementation, the method further includes: When the detection result is that the back surface of the main body of the wearable device faces upward, the wearable device further disables one or more of the following functions: a positioning function, a call function, and a pedometer function.

It can be learned that, when the power of the wearable device is insufficient, or when the user does not need to use some functions, after entering the preset mode with low power consumption, the wearable device may further disable some important functions with high power consumption, to minimize the power consumption of the wearable device and ensure that the wearable device can be used at more critical moments in the future.

In a possible implementation, the wearable device includes a first processor and a second processor. The first processor is configured to control the first display screen, and the second processor is configured to control the second display screen. That the wearable device controls the first display screen to display an image when a detection result is that the front surface of the main body of the wearable device faces upward includes: When the detection result is that the front surface of the main body of the wearable device faces upward, the first processor controls the first display screen to display the image, and the second processor controls the second display screen not to display an image. That the wearable device turns off the first display screen, and controls the second display screen to display an image when the detection result is that the back surface of the main body of the wearable device faces upward includes: When the detection result is that the back surface of the main body of the wearable device faces upward, the first processor controls the first display screen not to display an image, and the second processor controls the second display screen to display the image.

For example, power consumption caused when the first processor controls the first display screen to display an image is greater than power consumption caused when the second processor controls the second display screen to display an image.

In a possible implementation, that the first processor controls the first display screen to display the image, and the second processor controls the second display screen not to display an image when the detection result is that the front surface of the main body of the wearable device faces upward is specifically: When the detection result is that the front surface of the main body of the wearable device faces upward, the first processor controls the first display screen to display the image, and the second processor is in a disabled state or a sleep state.

That the first processor controls the first display screen not to display an image, and the second processor controls the second display screen to display the image when the detection result is that the back surface of the main body of the wearable device faces upward is specifically: When the detection result is that the back surface of the main body of the wearable device faces upward, the first processor turns off the first display screen and wakes up the second processor, and the second processor controls the second display screen to display the image.

In other words, in some examples, when the first processor controls the first display screen to display the image, the second processor may not be enabled or may be disabled. When the image needs to be displayed by the second display screen, the first processor enables or wakes up the second processor, so that the second processor controls the second display screen to display the image, to reduce the power consumption of the wearable device.

In a possible implementation, a Hall effect sensor is disposed on the main body, a magnetic body is disposed on the bottom support, and the Hall effect sensor detects a magnetic field generated by the magnetic body. The wearable device determines, based on a detection signal of the Hall effect sensor, whether the front surface or the back surface of the main body of the wearable device faces upward.

Therefore, an embodiment of this application provides a method for detecting whether a front surface or a back surface of a main body of a wearable device faces upward.

In a possible implementation, a distance between the Hall effect sensor and the magnetic body when the front surface of the main body of the wearable device faces upward is different from a distance between the Hall effect sensor and the magnetic body when the back surface of the main body faces upward. When determining, based on the detection signal of the Hall effect sensor, that a distance between the main body and the bottom support is a first distance value, the first processor of the wearable device determines that the front surface of the main body of the wearable device faces upward. When determining, based on the detection signal of the Hall effect sensor, that the distance between the main body and the bottom support is a second distance value, the first processor of the wearable device determines that the back surface of the main body of the wearable device faces upward. The second distance value is different from the first distance value.

The first distance value is a numerical value or a range of numerical values. The second distance value is a numerical value or a range of numerical values. It may be understood that, due to different strengths of turning-over actions of the user, or slight shaking of an arm of the user, the Hall effect sensor may detect a slight change in a distance between the main body 11 and the bottom support 13 when the front surface of the main body of the wearable device faces upward or the back surface of the main body faces upward. In other words, the first distance value and the second distance value may change within a small numerical range.

In this example, the Hall effect sensor may be specifically a single-axis Hall effect sensor, or may be a three-axis Hall effect sensor. The single-axis Hall effect sensor has low costs, and can reduce the power consumption of the wearable device while reducing costs as much as possible.

In a possible implementation, after the wearable device turns off the first display screen, and controls the second display screen to display an image in response to detecting that the back surface of the main body faces upward, the method further includes: When the first processor of the wearable device determines that the front surface of the main body of the wearable device faces upward, the first processor of the wearable device notifies the second processor to turn off the second display screen. The first processor of the wearable device controls the first display screen to display an image.

In a possible implementation, the method further includes: After the first processor of the wearable device turns off the first display screen and wakes up the second processor, the first processor enters a sleep state or a disabled state.

In other words, when the second processor in the wearable device controls the second display screen to display the image, the first processor may enter the sleep state or the disabled state, to further reduce the power consumption of the wearable device.

In a possible implementation, the second processor is electrically connected to the Hall effect sensor of the main body. After the wearable device turns off the first display screen, and controls the second display screen to display the image when the detection result is that the back surface of the main body of the wearable device faces upward, the method further includes: The second processor of the wearable device determines, based on the detection signal of the Hall effect sensor, that the front surface of the main body of the wearable device faces upward. The second processor of the wearable device turns off the second display screen, and wakes up the first processor of the wearable device. The first processor of the wearable device controls the first display screen to display an image.

In other words, after entering the preset mode with low power consumption, if the user needs to use the wearable device, the user may further perform a reverse operation, that is, turn over the watch body of the wearable device, so that the front surface of the watch body faces upward, the wearable device is controlled to return to a normal mode, and the first display screen is enabled to redisplay the image.

In a possible implementation, that the second processor of the wearable device determines, based on the detection signal of the Hall effect sensor, that the front surface of the main body of the wearable device faces upward includes: When determining, based on the detection signal of the Hall effect sensor, that the distance between the main body and the bottom support is the first distance value, the second processor of the wearable device determines that the front surface of the main body of the wearable device faces upward.

In a possible implementation, the method further includes: When the first processor of the wearable device determines, based on the detection signal of the Hall effect sensor, that the main body of the wearable device is separated from the bottom support, and the wearable device receives an incoming call, the wearable device automatically answers the incoming call.

It may be understood that, when the smartwatch receives the incoming call, the most likely reason for the user to remove the watch body of the smartwatch is to facilitate placing the watch body by the user next to an ear to answer the call. Therefore, the smartwatch can automatically answer the incoming call, meeting an operation intention of the user. In addition, when the smartwatch receives the incoming call, the user may remove the watch body from the bottom support, and then directly place the watch body next to the ear to answer the call. Compared with conventional technologies in which a user first taps an answer control on a smartwatch, and then keeps raising an arm to answer a call, the answering method provided in embodiments of this application provides better operation experience.

In a possible implementation, when the first processor of the wearable device determines, based on the detection signal of the Hall effect sensor, that the main body of the wearable device is separated from the bottom support, and the wearable device does not perform the call function, the wearable device automatically starts a camera application or displays a shortcut menu. The shortcut menu includes one or more of an option for starting a contact list, an option for starting the camera application, and/or a function option for searching for a surrounding device.

In a possible implementation, that the first processor of the wearable device determines, based on the detection signal of the Hall effect sensor, that the main body of the wearable device is separated from the bottom support includes: When the first processor of the wearable device determines, based on the detection signal of the Hall effect sensor, that the distance between the main body and the bottom support is greater than or equal to a third distance value, the first processor of the wearable device determines that the main body of the wearable device is separated from the bottom support. The third distance value is greater than the first distance value, and the third distance value is greater than the second distance value.

Therefore, an embodiment of this application provides a method for detecting an action of removing a main body of a wearable device from a bottom support by a user, that is, detecting a state in which the main body of the wearable device is separated from the bottom support.

According to a second aspect, a wearable device is provided, including a main body and a bottom support configured to support the main body. The main body is rotatable relative to the bottom support. A first display screen is disposed on a front surface of the main body. A second display screen is disposed on a back surface of the main body. Power consumption caused when the first display screen displays an image is greater than power consumption caused when the second display screen displays an image. The main body further includes a memory, a first processor, and a second processor. The memory is configured to store computer program code. The computer program code includes computer instructions. When the first processor or the second processor reads the computer instructions from the memory, the wearable device is enabled to perform the method according to any one of the first aspect or the possible implementations of the first aspect.

According to a third aspect, a computer-readable storage medium is provided, including computer instructions. When the computer instructions are run on a wearable device, the wearable device is enabled to perform the method according to any one of the first aspect or the possible implementations of the first aspect.

According to a fourth aspect, a computer program product is provided. When the computer program product runs on a wearable device, the wearable device is enabled to perform the method according to any one of the first aspect or the possible implementations of the first aspect.

According to a fifth aspect, a chip system is provided, including one or more processors. When the one or more processors execute instructions, the one or more processors perform the method according to any one of the first aspect or the possible implementations of the first aspect.

For technical effects that can be achieved by the wearable device according to the second aspect, the computer-readable storage medium according to the third aspect, the computer program product according to the fourth aspect, and the chip system provided according to the fifth aspect, refer to the description of the technical effects in any one of the first aspect or the possible implementations of the first aspect. Details are not described again.

### BRIEF DESCRIPTION OF DRAWINGS

FIG. 1 is a first schematic diagram of a structure of a wearable device according to an embodiment of this application;
FIG. 2 is a second schematic diagram of a structure of a wearable device according to an embodiment of this application;
FIG. 3 is a third schematic diagram of a structure of a wearable device according to an embodiment of this application;
FIG. 4 is a fourth schematic diagram of a structure of a wearable device according to an embodiment of this application;
FIG. 5 is a fifth schematic diagram of a structure of a wearable device according to an embodiment of this application;
FIG. 6 is a schematic diagram of some interfaces displayed on a primary screen of a wearable device according to an embodiment of this application;
FIG. 7 is a schematic flowchart of a method for reducing power consumption of a wearable device according to an embodiment of this application;
FIG. 8 is a schematic diagram of an interface displayed on a secondary screen of a wearable device according to an embodiment of this application;
FIG. 9 is a schematic diagram of some other interfaces displayed on a primary screen of a wearable device according to an embodiment of this application; and
FIG. 10 is a schematic diagram of still other interfaces displayed on a primary screen of a wearable device according to an embodiment of this application.

### DESCRIPTION OF EMBODIMENTS

In the descriptions of embodiments of this application, unless otherwise specified, "/" means or. For example, A/B may represent A or B. The terms such as "example" or "for example" are used to indicate examples, illustrations, or descriptions. Any embodiment or design scheme described as an "example" or "for example" in embodiments of this application should not be explained as being more preferred or having more advantages than another embodiment or design scheme. Exactly, use of the terms such as "example" or "for example" is intended to present a related concept in a specific manner.

Currently, the following methods may be used to reduce power consumption of a wearable device such as a smartwatch:

A first method: For a kids watch, a parent may disable, on a parent application (application, APP) end, functions with high power consumption, such as a trajectory function, of the kids watch, thereby reducing power consumption of the kids watch. However, it should be noted that the parent cannot know an actual usage of power of the kids watch. Therefore, the parent cannot disable the functions such as the trajectory function of the kids watch in time when battery power is low, and cannot reduce the power consumption of the kids watch in time.

A second method: The wearable device such as the smartwatch may also automatically enter a low power consumption mode when detecting that power of the wearable device is lower than a preset value (for example, 20%), and disable functions with high power consumption such as a positioning function. Although the method helps reduce the power consumption of the smartwatch when the power is insufficient, a use requirement of a user when the battery power is insufficient cannot be met. For example, the kids watch is still used as an example. During school classes, a student spends less time using the kids watch, but the kids watch has sufficient power, is in a normal working state, and continuously performs positioning, and the like. However, after school, the parent needs to know the student's trajectory through the positioning of the kids watch, but the kids watch may not have sufficient power and has automatically entered a low power consumption mode, in which the positioning function is disabled. It can be learned that, determining to enter the low power consumption mode only based on the power of the kids watch does not meet the use requirement of the user.

Therefore, an embodiment of this application provides a method for reducing power consumption of a wearable device. The method is applied to a wearable device including a rotating apparatus. The rotating apparatus can implement a rotation of a main body of the wearable device relative to a bottom support of the wearable device. The main body of the wearable device is a functional main body of the wearable device. The main body may include a housing and a display screen mounted on the housing. The main body may further include other components, such as a main board, a battery, a camera module, a receiver, a speaker that are mounted in the housing. The bottom support can be used as a main body bearer. A structure of the bottom support of the wearable device may be designed based on a requirement, for example, a roughly square plateshaped structure. Two opposite ends of the bottom support can be used to connect a wristband. When the wristband is bound to a wrist, the bottom support can be in contact with skin.

It should be noted that the wearable device described in embodiments of this application includes but is not limited to a smartwatch (for example, a kids watch) and a smart band. The following uses the smartwatch as an example for description.

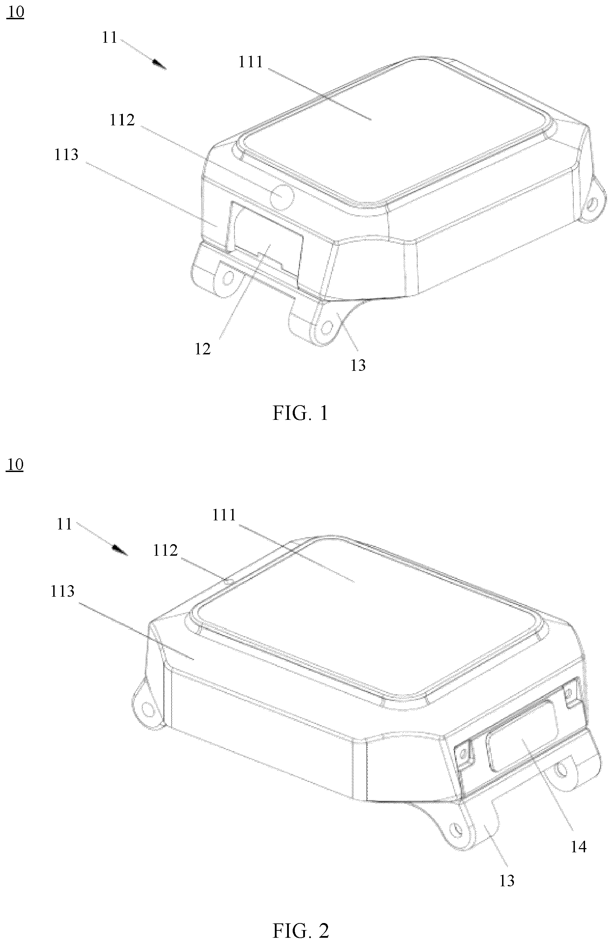

For example, as shown in FIG. 1 to FIG. 3, a smartwatch 10 provided in this embodiment of this application may include a main body (also referred to as a watch body) 11, a latch component 14, a rotating apparatus 12, a bottom support 13, and a fixing snap member 15. The main body 11 is rotatable relative to the bottom support 13.

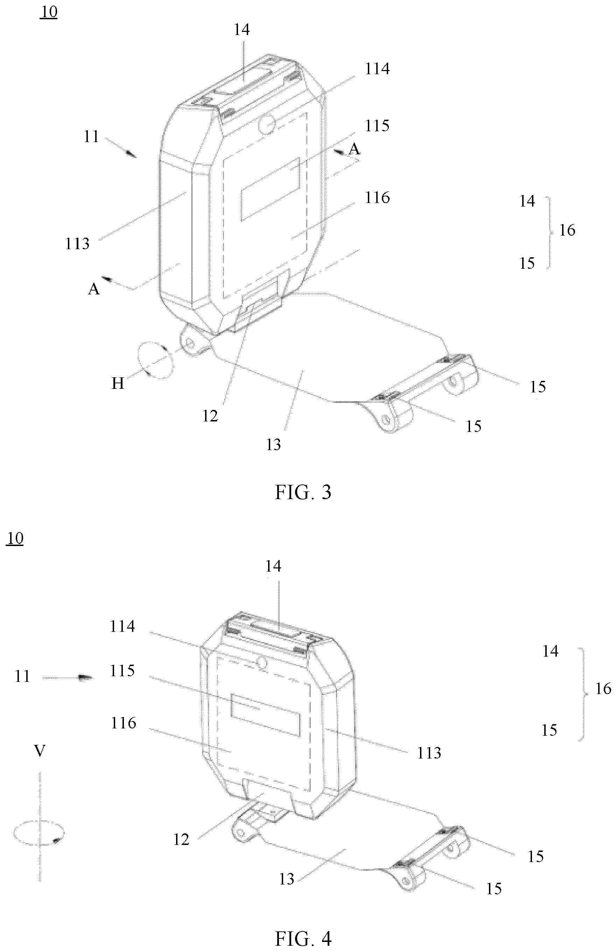

As shown in FIG. 1 and FIG. 2, the main body 11 may be a functional main body of the smartwatch 10, and may include a housing 113 and a display screen 111 (which may be referred to as a primary screen) mounted on the housing 113. The main body 11 may further include other components, such as a main board, a battery, a camera module, a receiver, a speaker that are mounted in the housing 113. There may be at least one camera module. For example, a camera module 112 may be disposed on a front side of the housing 113 in FIG. 1 and FIG. 2 (a side on which the display screen 111 is mounted). A camera module 114 may be disposed on a back side of the housing 113 in FIG. 3 (a side facing away from the display screen 111 or a side fitting with the bottom support 13). The foregoing quantity and positions of the camera modules are merely examples. This is not limited in this embodiment. For example, the camera module may also be located on a side of the housing 113 (a surface in a direction around the display screen 111). Alternatively, the camera module may not be disposed.

FIG. 1 and FIG. 2 show a state in which the main body 11 is placed horizontally on the bottom support 13, and the display screen 111 is in contact with the bottom support 13. In this case, a front surface of the main body/watch body of the smartwatch 10 faces upward. FIG. 3 shows a state in which the main body 11 is turned up relative to the bottom support 13.

Optionally, in some other examples, as shown in FIG. 3, a display screen 115 (which may be referred to as a secondary screen) may further be disposed on the back side of the housing 113. Power consumption of the display screen 115 in a working state is lower than power consumption of the foregoing display screen 111 in the working state. Optionally, the back side of the housing 113 may further include a solar panel 116. The solar panel 116 is configured to receive sunlight passing through a back side part of the housing 113, and convert solar radiation energy into electric energy. The electric energy converted by the solar panel 116 may be used as a backup to be used by the smartwatch 10 in an emergency situation. For example, when battery power of the smartwatch 10 is insufficient, the electric energy converted by the solar panel 116 may be used to implement functions such as calling for help in an emergency and swiping an access card.

In some embodiments, the display screen 115 may be controlled to work through hardware design and software design. For example, a magnetic body may be mounted on the bottom support 13. A controller and a Hall effect sensor may be disposed in the housing 113. The controller may be a processor or any other device/component having a signal processing function. The controller is electrically connected to the Hall effect sensor, and is also electrically connected to the display screen 115. The Hall effect sensor is used with the magnetic body. In this embodiment, when the main body 11 moves to a specific position relative to the bottom support 13, a distance between the Hall effect sensor in the housing 113 and the magnetic body on the bottom support 13 changes, and the Hall effect sensor outputs a detection signal. The detection signal may be used by the controller to detect a current position of the display screen 115. The controller determines the current position of the display screen 115 based on the detection signal output by the Hall effect sensor, and controls the display screen 115 to work. For example, refer to FIG. 3. When it is detected that the display screen 115 is turned up relative to the bottom support 13, the controller may control the display screen 115 to display simple images, such as numbers, texts, or symbols. Refer to FIG. 1 and FIG. 2, when it is detected that the display screen 115 is placed toward the bottom support 13, the controller may control the display screen 115 to be in standby without displaying the images.

Refer to FIG. 2 and FIG. 3, the latch component 14 can be fixed to the main body 11, and the fixing snap member 15 can be fixed to the bottom support 13. Positions of the latch component 14 and the fixing snap member 15 relative to the bottom support 13 shown in the figures are merely examples. Actually, the latch component 14 and the fixing snap member 15 may be located on any side of the bottom support 13. When the main body 11 is placed horizontally on the bottom support 13, the main body 11 may be locked on the bottom support 13 through snap-fit between the latch component 14 and the fixing snap member 15. The user may press the latch component 14 to separate it from the fixing snap member 15 to release locking between the main body 11 and the bottom support 13.

As shown in FIG. 2, FIG. 3, and FIG. 4, the main body 11 is rotatably connected to the bottom support 13 through the rotating apparatus 12. The position of the rotating apparatus 12 relative to the bottom support 13 shown in the figures is merely an example. Actually, the rotating apparatus 12 may be located on any side of the bottom support 13. After the main body 11 and the bottom support 13 are unlocked, the user can turn over the main body 11, so that the main body 11 rotates around an H axis and a V axis relative to the bottom support 13. The H axis is orthogonal to the V axis. When the smartwatch 10 is placed on a horizontal plane and the display screen 111 is parallel to the horizontal plane, the H axis may be substantially parallel to the horizontal plane, and the V axis may be substantially perpendicular to the horizontal plane. Therefore, the H axis may be referred to as a horizontal axis, and the V axis may be referred to as a vertical axis.

In an example, after the main body 11 and the bottom support 13 are unlocked, the user can turn up the main body 11, rotate the main body 11 around the V axis by 180 degrees, and then lock the main body 11 to the bottom support 13, so that the front side of the housing 113 (the side on which the display screen 111 is mounted) is in contact with the bottom support 13. In this case, the back surface of the main body/watch body of the smartwatch 10 faces upward (or in other words, the front surface of the main body/watch body faces downward). Further, when the main body 11 is placed horizontally on the bottom support 13, the main body 11 may be locked on the bottom support 13 through snap-fit between the latch component 14 and the fixing snap member 15.

It should be noted that, in some examples, when the back surface of the main body 11 of the smartwatch 10 faces upward, the distance between the Hall effect sensor (for example, a single-axis Hall effect sensor or a three-axis Hall effect sensor) disposed in the main body 11 and the magnetic body of the bottom support is different that when the front surface of the main body 11 faces upward. In this case, it may be identified, based on the detection signal output by the Hall effect sensor, that the smartwatch 10 is in a state in which the back surface of the main body faces upward, or in a state in which the front surface of the main body faces upward. In a specific implementation, the smartwatch 10 determines the detected distance between the Hall effect sensor disposed in the main body 11 and the magnetic body in the bottom support 13 as a distance between the main body 11 and the bottom support 13 of the smartwatch. For example, when it is determined, based on the detection signal of the Hall effect sensor, that the distance between the main body 11 and the bottom support 13 of the smartwatch is a preset distance value 1, it is determined that the smartwatch is in the state in which the back surface of the main body faces upward. The preset distance value 1 may be a numerical value or may be a range of numerical values. It may be understood that, when the smartwatch is in the state in which the back surface of the main body faces upward, due to different strengths of turning-over actions of the user, or slight shaking of an arm of the user, the Hall effect sensor may detect a slight change in the distance between the main body 11 and the bottom support 13. In other words, the preset distance value 1 may change within a small numerical range. When it is determined, based on the detection signal of the Hall effect sensor, that the distance between the main body 11 and the bottom support 13 of the smartwatch is a preset distance value 2, it is determined that the smartwatch is in the state in which the front surface of the main body faces upward. The preset distance value 2 is different from the foregoing preset distance value 1. The preset distance value 2 may be a numerical value or may be a range of numeric values. Similarly, when the smartwatch is in the state in which the front surface of the main body faces upward, due to different strengths of turning-over actions of the user, or slight shaking of an arm of the user, the Hall effect sensor may detect a slight change in the distance between the main body 11 and the bottom support 13. In other words, the preset distance value 2 may change within a small numerical range.

In some other examples, in a scenario in which the three-axis Hall effect sensor is disposed in the smartwatch 10, when the back surface of the main body 11 of the smartwatch 10 faces upward, a distance between the three-axis Hall effect sensor disposed in the main body 11 and the magnetic body of the bottom support may be the same as that when the front surface of the main body 11 faces upward. However, orientations of the three-axis Hall effect sensor relative to the magnetic body are different. For example, when the main body 11 of the smartwatch 10 is placed horizontally on the bottom support, and the bottom support is parallel to the horizontal plane, there is a distance difference in a horizontal direction between a position of the three-axis Hall effect sensor and a position of the magnetic body. Because the three-axis Hall effect sensor can detect a strength of magnetic field in the three-axis direction, when the back surface of the main body 11 of the smartwatch 10 face upward or when the front surface faces upward, at least a difference in the magnetic field on an axis can be detected by the three-axis Hall effect sensor. In other words, based on the detection signal output by the three-axis Hall effect sensor, it may be identified that the smartwatch 10 is in the state in which the back surface of the main body faces upward, or in the state in which the front surface of the main body faces upward.

In still other examples, two or more magnetic bodies may be disposed on the bottom support of the smartwatch 10. It may be understood that the Hall effect sensor (for example, the single-axis Hall effect sensor, or the three-axis Hall effect sensor) disposed in the main body of the smartphone 10 can detect a vector generated by the two or more magnetic bodies. In other words, when the Hall effect sensor and the magnetic body are disposed, only that when the back surface of the main body 11 of the smartwatch 10 faces upward, the vector detected by the Hall effect sensor provided in the main body 11 is different from that when the front surface of the main body 11 faces upward needs to be ensured. In other words, based on the detection signal output by the three-axis Hall effect sensor, it may be identified that the smartwatch 10 is in the state in which the back surface of the main body faces upward, or in the state in which the front surface of the main body faces upward.

In brief, in embodiments of this application, neither a type and an arrangement position of the Hall effect sensor in the smartwatch 10, nor a quantity, an arrangement position, and the like of the magnetic body in the smartwatch 10 are specifically limited. Further, in embodiments of this application, a method for determining, by the smartwatch 10 based on the detection signal of the Hall effect sensor, whether the back surface of the main body 11 of the smartwatch 10 faces upward or the front surface faces upward is not limited.

In some other examples, the rotating apparatus 12 not only enables the main body 11 of the smartwatch 10 to rotate relative to the bottom support 13, but also enables the main body 11 to be detachable from the bottom support 13. In this embodiment, after the main body 11 is detached from the bottom support 13, to be specific, the main body 11 is separated from the bottom support 13, the distance between the Hall effect sensor in the housing 113 and the magnetic body on the bottom support 13 is much greater than that when the main body 11 is connected to the bottom support 13. For example, when it is determined, based on the detection signal of the Hall effect sensor, that the distance between the main body 11 and the bottom support 13 of the smartwatch is greater than or equal to a preset distance value 3, it is determined that the smartwatch is removed from the bottom support. The preset distance value 3 is greater than the foregoing preset distance value 1, and is greater than the foregoing preset distance value 2.

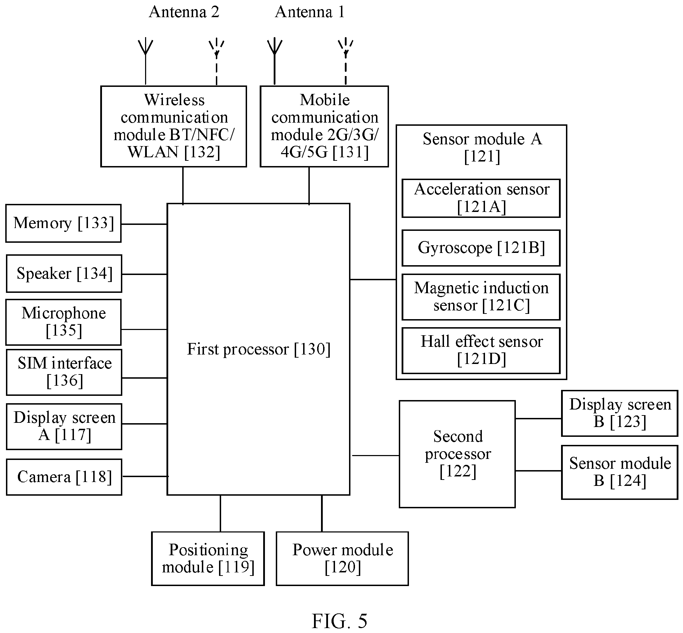

FIG. 5 is a schematic diagram of another structure of the smartwatch 10.

The smartwatch 10 may include a first processor 130, a mobile communication module 131, a wireless communication module 132, a memory 133, a speaker 134, a microphone 135, a subscriber identification module (subscriber identification module, SIM) card interface 136, a display screen A117, a camera 118, a positioning module 119, a power module 120, and sensor module A121. Optionally, in some other examples, the smartwatch 10 may further include a second processor 122, a display screen B 123, a sensor module B 124, and the like.

It may be understood that the structure shown in this embodiment of the present invention does not constitute a specific limitation on the smartwatch 10. In some other embodiments of this application, the smartwatch 10 may include more or fewer components than those shown in the figure, or some components may be combined, or some components may be divided, or different component arrangements may be used. The components shown in the figure may be implemented by hardware, software, or a combination of software and hardware. In addition, an interface connection relationship between the modules shown in embodiments of the present invention is merely a schematic description, and does not constitute a structural limitation on the smartwatch 10.

In an example, the first processor 130 includes one or more processing units. For example, the first processor 130 may include an application processor (application processor, AP), a modem processor, a graphics processing unit (graphics processing unit, GPU), an image signal processor (image signal processor, ISP), a controller, a video codec, and a digital signal processor (digital signal processor, DSP), a baseband processor, and/or a neural network processing unit (neural network processing unit, NPU), or the like. Different processing units may be independent devices, or may be integrated into one or more processors.

A wireless communication function of the smartwatch 10 may be implemented by using an antenna 1, an antenna 2, the mobile communication module 131, the wireless communication module 132, the modem processor, the baseband processor, and the like.

The mobile communication module 131 may provide a solution applied to the smartwatch 10 for wireless communication including 2G/3G/4G/5G and the like. The wireless communication module 132 may provide a solution applied to the smartwatch 10 for wireless communication including a wireless local area network (wireless local area network, WLAN) (such as a wireless fidelity (wireless fidelity, Wi-Fi) network), Bluetooth (Bluetooth, BT), a global navigation satellite system (global navigation satellite system, GNSS), frequency modulation (frequency modulation, FM), near field communication (near field communication, NFC), and infrared (infrared, IR), and the like.

The smartwatch 10 implements a display function by using the GPU, the display screen A117, the application processor, and the like. The GPU is a microprocessor for image processing, and is connected to the display screen A117 and the application processor. The GPU is configured to perform mathematical and geometric calculations for graphics rendering. The first processor 130 may include one or more GPUs that execute a program instruction to generate or change display information.

The display screen A117 is configured to display an image, a video, and the like. The display screen A117 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flex light-emitting diode (flex light-emitting diode, FLED), a mini-LED, a micro-LED, a micro-OLED, a quantum dot light-emitting diode (quantum dot light-emitting diode, QLED), or the like. In some embodiments, the smartwatch 10 may include one or N display screens A117, where N is a positive integer greater than 1.

In this embodiment of this application, the display screen A117 is disposed on a front surface of the smartwatch 10. The display screen A117 is also referred to as a "primary screen" or a "first display screen". For example, the display screen A117 is the foregoing display screen 111 in FIG. 1 and FIG. 2.

The smartwatch 10 may implement a photographing function by using the ISP, the camera 118, the video codec, the GPU, the display screen A117, the application processor, or the like.

The memory 133 may be configured to store computer executable program code, and the executable program code includes instructions. The memory 133 may include a program storage area and a data storage area. The program storage area may store an operating system, an application required by at least one function (such as a sound play function or an image play function), and the like. The data storage area may store data (such as audio data and image data) created in a process of using the smartwatch 10. In addition, the memory 133 may include a highspeed random access memory, and may further include a non-volatile memory, for example, at least one magnetic disk storage device, a flash memory, or a universal flash storage (universal flash storage, UFS). The first processor 130 executes various function applications and data processing of the smartwatch 10 by running the instructions stored in the memory 133 and/or instructions stored in the memory disposed in the processor.

The speaker 134, also referred to as a "loudspeaker", is configured to convert an audio electrical signal into a sound signal. The smartwatch 10 may allow for listening to music or listening to a hands-free call through the speaker 134.

The microphone 135, also referred to as a "mike" or a "mic", is configured to convert the sound signal into an electrical signal. When making a call or sending a voice message, a user may make a sound through a human mouth close to the microphone 135, and input a sound signal to the microphone 135.

The SIM card interface 136 is configured to connect to a SIM card. The SIM card may be inserted into the SIM card interface 136, or removed from the SIM card interface 136, to implement contact with and separation from the smartwatch 10. The SIM card interface 136 may support a nano-SIM card, a micro-SIM card, the SIM card, and the like. A plurality of cards may be inserted into the same SIM card interface 136 simultaneously. Types of the plurality of cards may be the same or different. The SIM card interface 136 may also be compatible with different types of SIM cards. The SIM card interface 136 may also be compatible with an external memory card. The smartwatch 10 interacts with a network through the SIM card, to implement functions such as call and data communication. In some embodiments, the smartwatch 10 uses an eSIM, that is, an embedded SIM card. The eSIM card may be embedded in the smartwatch 10, and cannot be separated from the smartwatch 10.

The sensor module A121 includes an acceleration sensor 121A, a gyroscope 121B, a magnetic induction sensor 121C, a Hall effect sensor 121D, and the like.

The acceleration sensor 121A may detect accelerations of the smartwatch 10 in all directions (generally three axes). When the smartwatch 10 is stationary, magnitude and a direction of gravity may be detected. The gyroscope 121B may be configured to determine a motion attitude of the smartwatch 10. In some embodiments, angular velocities of the smartwatch 10 around three axes (that is, an x axis, a y axis, and a z axis) may be determined by using the gyroscope 121B. The magnetic induction sensor 121C, also referred to as an electronic compass, is configured to position a device. In some examples, the smartwatch 10 may calculate an attitude of the smartwatch 10 based on the acceleration sensor 121A, the gyroscope 121B, and the magnetic induction sensor 121C, and apply the attitude to a pedometer application.

The Hall effect sensor 121D is configured to detect whether a front surface or a back surface of a watch body of the smartwatch 10 faces upward, so that the first processor 130 determines whether the smartwatch 10 enters a do-not-disturb mode, a power saving mode, a predefined mode, or the like. The Hall effect sensor 121D is further configured to detect whether the watch body of the smartwatch 10 is separated from the housing, so that the first processor 130 determines whether to automatically answer calls or the like.

Certainly, the sensor module A121 may further include other sensors, and details are not described herein again.

In an example, the second processor 122 is a microcontroller unit (microcontroller unit, MCU), also referred to as a single chip microcomputer (single chip microcomputer) or a single chip, and is configured to control devices such as the display screen B 123 and the sensor module B124.

In this embodiment of this application, the display screen B 123 is disposed on the back surface of the smartwatch 10. The display screen B123 is also referred to as a "secondary screen" or a "second display screen". For example, the display screen B 123 is the foregoing display screen 115 in FIG. 3 and FIG. 4. For example, the display screen B123 may be an LCD, for example, a TN-type LCD, an HTN-type LCD, an STN-type LCD, or an FSTN-type LCD. In some embodiments, the display screen B 123 may be a segment display screen. A fixed position in the segment display screen has pixels, and only simple images, such as numbers, texts, and symbols, can be displayed at the fixed position. Alternatively, the display screen B123 may be a dot matrix screen. There are pixels arranged in an array in the dot matrix screen, and rich images may be displayed at any position. The dot matrix screen may have a small quantity of pixels. For example, the pixels may be less than or equal to 200. Using the foregoing two types of display screens can reduce power usage during display of the smartwatch, thereby reducing power consumption. In other embodiments, a quantity of pixels of the dot matrix screen may not be limited. Alternatively, the transparent display screen is not limited to the segment screen or the dot matrix screen.

Optionally, the smartwatch 10 may further include the sensor module B 124. The sensor module B 124 may include an acceleration sensor, a gyroscope magnetometer, a barometer, a light sensor, an ultraviolet UV sensor, a Hall effect sensor, and the like. Certainly, the sensor module B 124 may further include other sensors, and details are not described herein again.

The technical solutions provided in embodiments of this application are applied to the smartwatch with the foregoing structures shown in FIG. 1 to FIG. 5. The following describes the technical solutions provided in embodiments of this application in detail with reference to the accompanying drawings.

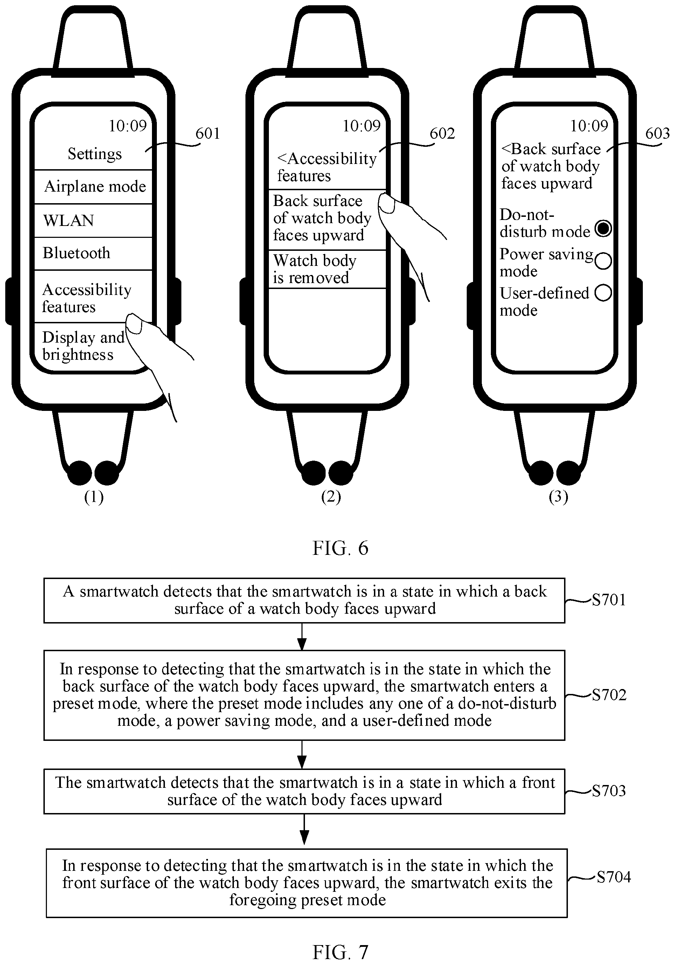

In some embodiments, a user may set accessibility features of a smartwatch by using a settings application of the smartwatch. For example, section (1) in FIG. 6 is a home screen 601 of a settings application displayed by a smartwatch. In response to detecting that a user operates an "accessibility features" option, the smartwatch displays an accessibility feature interface 602 shown in section (2) in FIG. 6. The accessibility feature interface 602 includes a "back surface of watch body faces upward" option and a "watch body is removed" option. Certainly, the accessibility feature interface 602 may further include an option for another function. In response to detecting that the user selects the "back surface of watch body faces upward" option, the smartwatch displays a setting interface 603 with the "back surface of watch body faces upward" option shown in section (3) in FIG. 6.

If the user selects "enter do-not-disturb mode" on the setting interface 603, the smartwatch automatically enters the do-not-disturb mode after detecting that the back surface of the watch body faces upward. In some examples, after the smartwatch enters the do-not-disturb mode, the smartwatch turns off a primary screen (to be specific, the primary screen is controlled to not display an image, and the primary screen is in an off state), wakes up a second processor (for example, an MCU) to light up a secondary screen (to be specific, the second processor controls the secondary screen to display the image, and the secondary screen is in a working state). It may be understood that power consumption caused when the smartwatch controls the secondary screen to be in the working state is lower than power consumption caused when the smartwatch controls the primary screen to be in the working state. In other words, after the smartwatch enters the do-not-disturb mode, overall power consumption of the smartwatch is reduced. Optionally, in some other examples, after the smartwatch enters the do-not-disturb mode, the smartwatch further mutes a sound (for example, disables a voice prompt), and disables a push (push) function of the smartwatch (for example, does not push new information or an incoming call notification). Optionally, in some other examples, after the smartwatch enters the do-not-disturb mode, the smartwatch may further disable a positioning function or the like. It should be noted that functions that are disabled after the smartwatch enters the do-not-disturb mode are not specifically limited in embodiments of this application.

If the user selects "enter power saving mode" on the setting interface 603, the smartwatch automatically enters the power saving mode after detecting that the back surface of the watch body faces upward. In some examples, after the smartwatch enters the power saving mode, the smartwatch wakes up the second processor (for example, the MCU) to light up the secondary screen (to be specific, the secondary screen is controlled to display the image, and the secondary screen is in the working state). The smartwatch turns off the primary screen (to be specific, the primary screen is controlled to not display the image, and the primary screen is in the off state). In addition, the first processor of the smartwatch disables functions with high power consumption in the smartwatch, for example, the push function, the positioning function, or the call function of the smartwatch. It can be learned that, after the smartwatch enters the power saving mode, the overall power consumption of the smartwatch is reduced. Optionally, the smartwatch may further disable the first processor (for example, an AP), thereby further reducing power consumption of the smartwatch.

If the user selects a "user-defined mode" in the setting interface 603, the smartwatch may receive a user-defined mode. The smartwatch automatically enters the user-defined mode after detecting that the back surface of the watch body faces upward. In other words, the user may customize, based on a use requirement of the user, functions that the smartwatch disables when the back surface of the smartwatch body faces upward, and the like. This is described in detail below.

Certainly, in some other embodiments, the user may not need to set the foregoing options. After detecting that the back surface of the watch body faces upward, the smartwatch automatically enters a default mode. The default mode may be any one of the foregoing modes.

FIG. 7 is a schematic flowchart of a method for reducing power consumption of a wearable device (such as a smartwatch) according to an embodiment of this application. The process includes the following steps.

S701: The smartwatch detects that the smartwatch is in a state in which a back surface of a watch body faces upward.

As described above, after the user sets, on the interface 603 in section (3) in FIG. 6, the accessibility feature of the back surface of the watch body facing upward, the smartwatch enables a Hall effect sensor in the watch body, and the Hall effect sensor works with a magnetic body (for example, a magnet) disposed on a bottom support to detect a distance between the watch body and the bottom support of the smartwatch. Alternatively, the smartwatch keeps enabling the Hall effect sensor by default.

When it is determined, based on a detection signal of the Hall effect sensor, that the distance between the watch body and the bottom support of the smartwatch is a preset distance value 1, it is determined that the smartwatch is in the state in which the back surface of the watch body faces upward.

S702: In response to detecting that the smartwatch is in the state in which the back surface of the watch body faces upward, the smartwatch enters a preset mode. The preset mode includes any one of the following modes: a do-not-disturb mode, a power saving mode, and a user-defined mode.

For ease of understanding the preset mode (including the do-not-disturb mode, the power saving mode, and the user-defined mode) in this embodiment of this application, Table 1 shows comparison of working states and running functions of devices in the smartwatch in the preset mode and a normal mode. The normal mode refers to a working mode of the smartwatch when a front surface of the watch body faces upward, or a working mode of the smartwatch when the front surface of the watch body faces upward and power is sufficient.

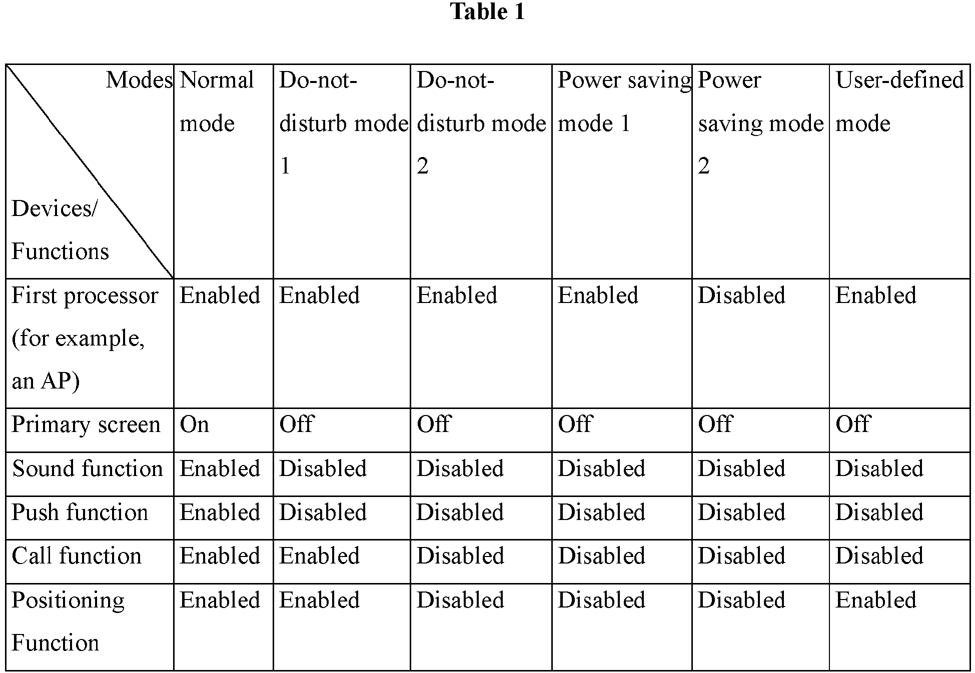

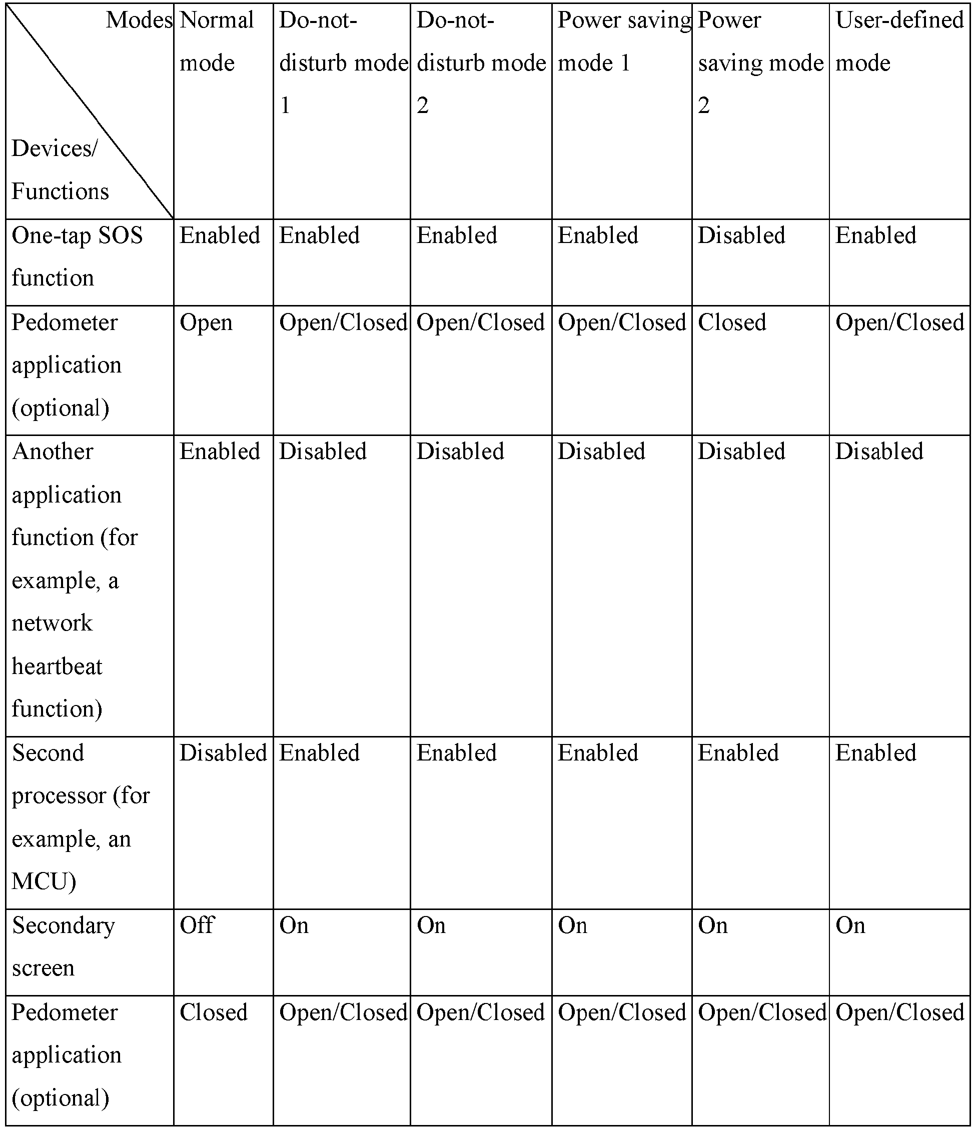

As shown in Table 1, when the smartwatch is in the state in which the front surface of the watch body faces upward, the smartwatch works in the normal mode. In this case, the first processor (for example, the AP) of the smartwatch controls the primary screen to display a related interface, and enables the sound function, the push function, the call function, the positioning function, the one-tap SOS function, the pedometer application, and another application function. The second processor (for example, the MCU) of the smartwatch is in the disabled state or a sleep state, and all functions controlled by the second processor are in the disabled state, for example, the secondary screen is turned off, and the pedometer application is closed.

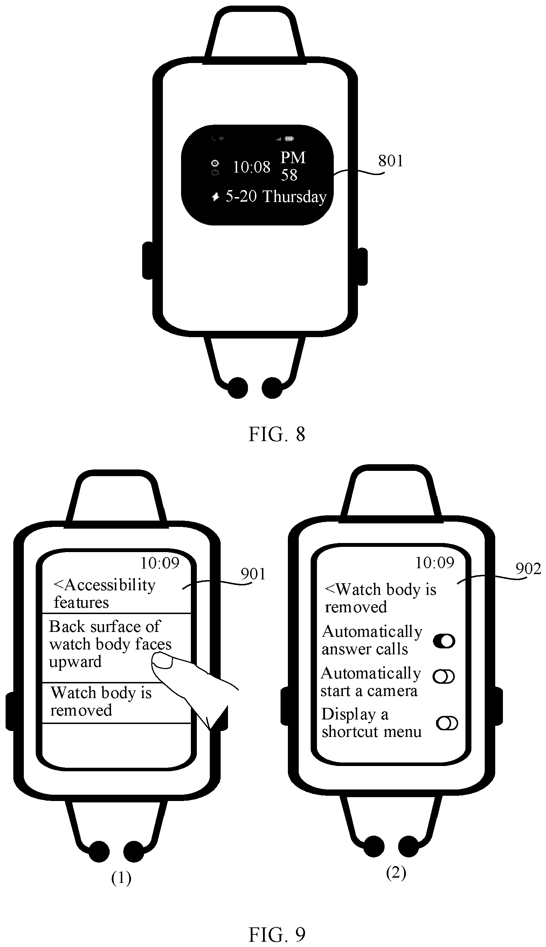

For example, in response to detecting that the smartwatch is in the state in which the back surface of the watch body faces upward, the smartwatch enters the do-not-disturb mode 1 or the do-not-disturb mode 2. Specifically, the first processor (for example, the AP) of the smartwatch controls the primary screen to be turned off, the sound function is disabled (for example, a sound prompt is disabled), and the push function and another application function (for example, the network heartbeat function) are disabled. In addition, the first processor wakes up the second processor, and the second processor lights up the secondary screen. In this case, the secondary screen can be configured to display information such as time and date. For example, FIG. 8 shows an interface 801 displayed on a secondary screen of a smartwatch. In the do-not-disturb mode 1, the first processor may keep important functions such as the call function, the positioning function, and the one-tap SOS function enabled. For example, in a scenario in which a child wears the smartwatch, keeping these important functions enabled helps ensure safety of the child.

In other examples, the smartwatch may not be provided with a second processor. In other words, the secondary screen is directly connected to the first processor. The first processor may control the secondary screen to display the information such as time and date.

In the do-not-disturb mode 2, the first processor may also disable any one or several of the following functions: the call function, the positioning function, and the one-tap SOS function. For example, when an adult wears the smartwatch, the positioning function and the call function may be disabled, and the one-tap SOS function may be kept enabled.

In addition, applications with low power consumption, for example, the pedometer application, may be controlled by the first processor or the second processor. In this case, the first processor or the second processor may keep such applications with low power consumption open or closed.

For another example, in response to detecting that the smartwatch is in the state in which the back surface of the watch body faces upward, the smartwatch enters the power saving mode 1 or the power saving mode 2. Specifically, the first processor (for example, the AP) of the smartwatch controls the primary screen to be turned off, the sound function is disabled (for example, the sound prompt is disabled), and the push function, the call function and another application function (for example, the network heartbeat function) are disabled. In addition, the first processor wakes up the second processor, and the second processor lights up the secondary screen. In this case, the secondary screen can be configured to display the information such as time and date. In the power saving mode 1, the first processor is still in an enabled state, and may keep some important functions such as the one-tap SOS function enabled.

In addition, applications with low power consumption, for example, the pedometer application, may be controlled by the first processor or the second processor. In this case, the first processor or the second processor may keep such applications with low power consumption open or closed.

In the power saving mode 2, after waking up the second processor, the first processor automatically shuts down or enters the sleep state, and all application functions controlled by the first processor are disabled. The second processor lights up the secondary screen to display the information such as time and date. The second processor may further open some applications with low power consumption, for example, the pedometer application.

For another example, the user may select a user-defined mode in advance on the foregoing interface 603 shown in section (3) in FIG. 6, and set the user-defined mode, for example, set the user-defined mode in the foregoing Table 1. To be specific, the user can set, based on a use requirement of the user, a mode to enter after the back surface of the watch body faces upward, that is, which functions are enabled and which functions are disabled.

In conclusion, compared with the normal mode, the do-not-disturb mode, the power saving mode, and the user-defined mode all help reduce the overall power consumption of the smartwatch and prolong standby time of the smartwatch.

It should be noted that the foregoing Table 1 merely provides examples of several preset modes. Specific settings of the preset mode are not limited in this embodiment of this application.

S703: The smartwatch detects that the smartwatch is in a state in which a front surface of the watch body faces upward.

It should be noted that the Hall effect sensor of the smartwatch continuously detects watch body state of the smartwatch. In some examples, after the smartwatch enters the preset mode, the smartwatch may prolong a detection cycle, and detect the watch body state of the smartwatch in a long cycle. This helps reduce the power consumption of the smartwatch. When it is determined, based on the detection signal of the Hall effect sensor, that the distance between the watch body and the bottom support of the smartwatch is a preset distance value 2, it is determined that the smartwatch is in the state in which the front surface of the watch body faces upward. The preset distance value 2 is different from the foregoing preset distance value 1.

For example, in the foregoing power saving mode 2, the second processor is further connected to the Hall effect sensor. The second processor determines, based on the detection signal of the Hall effect sensor, whether the front surface or the back surface of the watch body of the smartwatch faces upward.

In another preset mode other than the power saving mode 2, when the first processor is in the enabled state, the watch body state of the smartwatch may be detected by using the Hall effect sensor connected to the first processor. To be specific, the first processor determines, based on the detection signal of the Hall effect sensor, whether the front surface or the back surface of the watch body of the smartwatch faces upward. It should be noted that in another mode, the second processor may be connected to the Hall effect sensor, or may not be connected to the Hall effect sensor. If the second processor is connected to the Hall effect sensor, the Hall effect sensor connected to the second processor may be used for detection. This is not limited in this embodiment of this application.

S704: The smartwatch exits the foregoing preset mode in response to detecting that the smartwatch is in the state in which the front surface of the watch body faces upward.

The smartwatch exits the foregoing preset mode, and returns to the normal mode.

Optionally, in some other embodiments, if the smartwatch is in the state in which the front surface of the watch body faces upward, and when detecting that power of the smartwatch is less than a preset value (for example, 20%), the smartwatch may automatically enter another power saving mode. For example, the first processor may disable some functions with high power consumption (such as the positioning function and the call function), and reduce a refresh frequency, display brightness, and the like of the primary screen. This is not limited in this embodiment of this application. Certainly, in this embodiment, the user may alternatively enable the smartwatch to return to the normal mode by performing an operation of exiting the power saving mode.

It can be learned from the foregoing that, when the user finds that the power of the smartwatch is insufficient, or when the user does not need to use the smartwatch for a long period of time, or when the user actively wants to save the power, the watch body of the smartwatch may be turned over, so that the back surface of the watch body faces upward (or the front surface faces downward), to control the smartwatch to enter a preset mode with low power consumption, thereby reducing the power consumption of the smartwatch and prolonging the standby duration of the smartwatch. When the user needs to use the smartwatch, the user may further perform a reverse operation, that is, turn over the watch body of the smartwatch, so that the front surface of the watch body faces upward, the smartwatch is controlled to return to the normal mode. Compared with a method in conventional technologies in which the smartwatch enters the power saving mode only based on the power of the smartwatch, the method provided in this embodiment of this application can better meet the use requirement of the user.

The following describes several scenarios applicable to this embodiment of this application as examples.

In a first scenario, a student wears the smartwatch (for example, a kids watch) during school.

After entering the school, the student can turn over and lock the watch body of the smartwatch (in this case, the back surface of the watch body faces upward). In this case, the smartwatch enters the power saving mode. Because students are safe after entering the school, the smartwatch may disable the application functions with high power consumption, such as the positioning function and the call function, helping save the power consumption of the smartwatch to a maximum extent. In addition, when the student is in the school, the sound function and the push function of the smartwatch may be disabled, helping avoid distracting the student when learning. In this case, the secondary screen of the smartwatch may display information such as time, and the smartwatch may be used as a common watch.

After school, the student can turn over the watch body of the smartwatch, so that the front surface of the watch body faces upward. In this case, the smartwatch returns to the normal mode. During school, the smartwatch enters the power saving mode, thereby greatly saving the power and ensuring that the smartwatch has sufficient power after school. The positioning function and the call function of the smartwatch are enabled, helping the student contact their parents and helping parents pay attention to tracks of the student.

In addition, a teacher may view the state of the watch body of the smartwatch, to timely remind the student to adjust the watch body to be in the state in which the back surface faces upward during school and adjust the watch body to be in the state in which the front surface faces upward after school. This is convenient for the teacher to manage a problem that the student wears the smartwatch.

In a second scenario, the student wears the smartwatch during non-school periods.

When the student wears the smartwatch during non-school periods (for example, holidays, winter and summer holidays), the student can turn over the watch body of the smartwatch and lock it (in this case, the back surface of the watch body faces upward). In this case, the smartwatch enters the do-not-disturb mode. The smartwatch may keep important functions such as the positioning function enabled, and disable the call function, disable the sound function, and disable the push function and another non-important application function. This reduces the power consumption of the smartwatch as much as possible. Parents can contact the student and pay attention to tracks of the student.

In a third scenario, an adult wears the smartwatches to go out.

The adult can set different user-defined modes based on different scenarios.

For example, when the adult wears the smartwatch for sports, hiking, or the like, the watch body of the smartwatch may be turned over and locked (in this case, the back surface of the watch body faces upward), and the smartwatch enters a user-defined mode 1. In this case, the smartwatch may keep the pedometer and positioning functions enabled, disable the call function, disable the sound function, and disable the push function and another non-important application function.

For another example, when the adult wears the smartwatch for a conference, the watch body of the smartwatch may be turned over and locked (in this case, the back surface of the watch body faces upward), and the smartwatch enters a user-defined mode 2. In this case, the smartwatch may keep the call function enabled, disable the pedometer and positioning functions, disable the sound function, and disable the push function and another non-important application function.

In addition, the call function is also a frequently used function in the smartwatch. When the user wears the smartwatch, the user needs to raise an arm to make a call, resulting in poor user experience. In some other embodiments of this application, the user may remove the watch body of the smartwatch from the bottom support, to be specific, the watch body is separated from the bottom support. In this case, the user may directly pick up the watch body and place the watch body next to an ear to answer the call.

For example, the user may set the accessibility feature of the smartwatch by using the settings application of the smartwatch. For example, section (1) in FIG. 9 shows an accessibility feature interface 901 shown by a smartwatch. In response to detecting that the user selects a "watch body is removed" option, the smartwatch displays a setting interface 902 of the "watch body is removed" option shown in section (2) in FIG. 9. The user can enable a function of automatically answering calls. Alternatively, the user can enable a function of automatically turning on a camera. Alternatively, the user can enable a function of displaying a shortcut menu. Specifically, the user can enable any of the foregoing functions. Alternatively, the user can enable the two functions simultaneously, and the functions are not mutually exclusive. For example, the user can enable the function of automatically answering the calls and the function of automatically turning on the camera. In this case, when the smartwatch receives an incoming call and detects that the watch body is removed, the smartwatch automatically answers the incoming call. When the smartwatch does not receive the incoming call and detects that the watch body is removed, the smartwatch automatically enables the function of turning on the camera. For another example, the user can enable the function of automatically answering the calls and the function of displaying the shortcut menu. In this case, when the smartwatch receives an incoming call and detects that the watch body is removed, the smartwatch automatically answers the incoming call. When the smartwatch does not receive the incoming call and detects that the watch body is removed, the smartwatch enables the function of displaying the shortcut menu.

Certainly, in some other examples, the user may also not need to set the foregoing options. After detecting that the watch body is removed, the smartwatch automatically answers the incoming call, enables the function of the camera, displays the shortcut menu, or the like.

In some embodiments of this application, when receiving the incoming call, the smartwatch detects that the user removes the watch body of the smartwatch from the bottom support (to be specific, the watch body is separated from the bottom support), the smartwatch may automatically answer the call. Specifically, as described above, after the user sets, on the interface 902 in section (2) in FIG. 9, the accessibility feature of removing the watch body, the smartwatch enables a Hall effect sensor in the watch body, and the Hall effect sensor works with a magnetic body disposed on a bottom support to detect a distance between the watch body and the bottom support of the smartwatch. Alternatively, the smartwatch keeps enabling the Hall effect sensor by default. When it is determined, based on the detection signal of the Hall effect sensor, that the distance between the watch body and the bottom support of the smartwatch is greater than or equal to a preset distance value 3, it is determined that the smartwatch is removed from the bottom support. The preset distance value 3 is greater than the foregoing preset distance value 1, and is greater than the foregoing preset distance value 2.

It may be understood that, when the smartwatch receives the incoming call, the most likely reason for the user to remove the watch body of the smartwatch is to facilitate placing the watch body by the user next to an ear to answer the call. Therefore, the smartwatch can automatically answer the incoming call, meeting an operation intention of the user. In addition, when the smartwatch receives the incoming call, the user may remove the watch body from the bottom support, and then directly place the watch body next to the ear to answer the call. Compared with conventional technologies in which a user first taps an answer control on a smartwatch, and then keeps raising an arm to answer a call, the answering method provided in embodiments of this application provides better operation experience.

In some other embodiments of this application, when a smartwatch detects that a user removes a watch body of the smartwatch from a bottom support (to be specific, the watch body is separated from the bottom support), and the smartwatch is not in a call (including an audio call and a video call), the smartwatch can also automatically enable a photographing function of a camera.

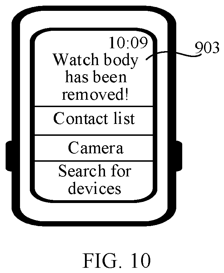

In still some embodiments of this application, when a smartwatch detects that a user removes a watch body of the smartwatch from a bottom support (to be specific, the watch body is separated from the bottom support), and the smartwatch is not in a call (including an audio call and a video call), the smartwatch can also display a shortcut menu, so that the user can quickly select a corresponding application function. For example, FIG. 10 shows a shortcut menu 903 displayed by a smartwatch after a watch body of the smartwatch is removed. The shortcut menu 903 includes options such as "contact list", "camera", and "search for devices". In response to detecting an operation of selecting the "contact list" option by a user, the smartwatch displays the contact list, so that the user can quickly make a call. In response to detecting an operation of selecting the "camera" option by the user, the smartwatch enables a photographing function of the camera. In response to detecting an operation of selecting the "search for devices" option by the user, the smartwatch starts to search for surrounding devices, so that the smartwatch can start to find other devices, for example, a smart speaker, a wireless charging dock, or an external keyboard. In other words, when the watch body of the smartwatch is removed, the user may quickly enable, by using the shortcut menu 903, a function that needs to be used in a scenario in which the watch body is removed.

An embodiment of this application further provides an apparatus. The apparatus is included in a wearable device, and the apparatus has the functions of implementing behaviors of the wearable device in any method in the foregoing embodiments. This function may be implemented by using hardware, or may be implemented by executing corresponding software by hardware. The hardware or software includes at least one module or unit corresponding to the foregoing functions. For example, a detection module or unit, a display module or unit, a determining module or unit, and a calculation module or unit.

An embodiment of this application further provides a computer storage medium including computer instructions. When the computer instructions are run on a wearable device, the wearable device is enabled to perform any method in the foregoing embodiments.

An embodiment of this application further provides a computer program product. When the computer program product runs on a computer, the computer is enabled to perform any method in the foregoing embodiments.

An embodiment of this application further provides a graphical user interface on a wearable device. The wearable device has a display screen, a camera, a memory, and one or more processors, and the one or more processors are configured to execute one or more computer programs stored in the memory. The graphical user interface includes a graphical user interface displayed when the wearable device performs any method in the foregoing embodiments.

It may be understood that to implement the foregoing functions, the foregoing terminal includes corresponding hardware structures and/or software modules for executing each function. A person skilled in the art should be easily aware that, in combination with the units and the algorithm steps in the examples described in embodiments disclosed in this specification, embodiments of this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of embodiments of the present invention.

In embodiments of this application, functional modules of the foregoing terminal may be divided based on the foregoing method embodiment. For example, each functional module may be divided corresponding to each function, or two or more functions may be integrated into one processing module. The foregoing integrated module may be implemented in a form of hardware, or may be implemented in a form of a software function module. It should be noted that the module division in embodiments of the present invention is schematic, and is merely logical function division. In an actual implementation, there may be another division manner.

The foregoing descriptions about implementations allow a person skilled in the art to clearly understand that, for the purpose of convenient and brief description, the division of the foregoing function modules is taken as an example for illustration. In an actual application, the foregoing functions can be allocated to different modules and implemented based on a requirement, that is, an inner structure of an apparatus is divided into different function modules to implement all or some of the functions described above. For a detailed working process of the foregoing system, apparatus, and unit, reference may be made to a corresponding process in the foregoing method embodiments, and details are not described herein again.

Functional units in embodiments of this application may be integrated into one processing unit, or each of the units may exist alone physically, or two or more units are integrated into one unit. The foregoing integrated unit may be implemented in a form of hardware, or may be implemented in a form of a software function unit.

When the integrated unit is implemented in the form of the software function unit and sold or used as an independent product, the integrated unit may be stored in a computer-readable storage medium. Based on such an understanding, the technical solutions of embodiments of this application essentially, or the part contributing to conventional technologies, or all or some of the technical solutions may be implemented in the form of a software product. The computer software product is stored in a storage medium and includes several instructions for instructing a computer device (which may be a personal computer, a server, or a network device) or a processor to perform all or some of the steps of the methods described in embodiments of this application. The foregoing storage medium includes any medium that can store program code, such as a flash drive, a removable hard disk, a read-only memory, a random access memory, a magnetic disk, or an optical disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A method for reducing power consumption of a wearable device, applied to a wearable device, wherein the wearable device comprises a main body and a bottom support configured to support the main body, the main body is rotatable relative to the bottom support, a first display screen is disposed on a front surface of the main body, a second display screen is disposed on a back surface of the main body, power consumption caused when the first display screen displays an image is greater than power consumption caused when the second display screen displays an image, and the method comprises:
detecting whether the front surface or the back surface of the main body of the wearable device faces upward; and
when a detection result is that the front surface of the main body of the wearable device faces upward, controlling, by the wearable device, the first display screen to display an image; or
when the detection result is that the back surface of the main body of the wearable device faces upward, turning off, by the wearable device, the first display screen, and controlling the second display screen to display an image.

2. The method according to claim 1, wherein the method further comprises:
when the detection result is that the back surface of the main body of the wearable device faces upward, disabling, by the wearable device, one or more of the following functions: a sound function, a push function, and a network heartbeat function.

3. The method according to claim 1 or 2, wherein the method further comprises:
when the detection result is that the back surface of the main body of the wearable device faces upward, disabling, by the wearable device, one or more of the following functions: a positioning function, a call function, and a pedometer function.

4. The method according to any one of claims 1 to 3, wherein the wearable device comprises a first processor and a second processor, the first processor is configured to control the first display screen, and the second processor is configured to control the second display screen;
the controlling, by the wearable device, the first display screen to display an image when a detection result is that the front surface of the main body of the wearable device faces upward comprises:
when the detection result is that the front surface of the main body of the wearable device faces upward, controlling, by the first processor, the first display screen to display the image, and controlling, by the second processor, the second display screen not to display an image; and
the turning off, by the wearable device, the first display screen, and controlling the second display screen to display an image when the detection result is that the back surface of the main body of the wearable device faces upward comprises:
when the detection result is that the back surface of the main body of the wearable device faces upward, controlling, by the first processor, the first display screen not to display an image, and controlling, by the second processor, the second display screen to display the image.

5. The method according to claim 4, wherein
the controlling, by the first processor, the first display screen to display the image, and controlling, by the second processor, the second display screen not to display an image when the detection result is that the front surface of the main body of the wearable device faces upward is specifically:
when the detection result is that the front surface of the main body of the wearable device faces upward, controlling, by the first processor, the first display screen to display the image, wherein the second processor is in a disabled state or a sleep state; and
the controlling, by the first processor, the first display screen not to display an image, and controlling, by the second processor, the second display screen to display the image when the detection result is that the back surface of the main body of the wearable device faces upward is specifically:
when the detection result is that the back surface of the main body of the wearable device faces upward, turning off, by the first processor, the first display screen, waking up the second processor, and controlling, by the second processor, the second display screen to display the image.

6. The method according to any one of claims 1 to 5, wherein a Hall effect sensor is disposed on the main body, a magnetic body is disposed on the bottom support, and the Hall effect sensor detects a magnetic field generated by the magnetic body; and
the wearable device determines, based on a detection signal of the Hall effect sensor, whether the front surface or the back surface of the main body of the wearable device faces upward.

7. The method according to claim 6, wherein a distance between the Hall effect sensor and the magnetic body when the front surface of the main body of the wearable device faces upward is different from a distance between the Hall effect sensor and the magnetic body when the back surface of the main body faces upward; and
when determining, based on the detection signal of the Hall effect sensor, that a distance between the main body and the bottom support is a first distance value, the first processor of the wearable device determines that the front surface of the main body of the wearable device faces upward; or
when determining, based on the detection signal of the Hall effect sensor, that the distance between the main body and the bottom support is a second distance value, the first processor of the wearable device determines that the back surface of the main body of the wearable device faces upward, wherein the second distance value is different from the first distance value.

8. The method according to any one of claims 4 to 7, wherein after the turning off, by the wearable device, the first display screen, and controlling the second display screen to display an image when the detection result is that the back surface of the main body of the wearable device faces upward, the method further comprises:
when the first processor of the wearable device determines that the front surface of the main body of the wearable device faces upward, notifying, by the first processor of the wearable device, the second processor to turn off the second display screen; and
controlling, by the first processor of the wearable device, the first display screen to display an image.

9. The method according to any one of claims 4 to 7, wherein the method further comprises:
after the first processor of the wearable device turns off the first display screen and wakes up the second processor, entering, by the first processor, a sleep state or a disabled state.

10. The method according to claim 9, wherein the second processor is electrically connected to the Hall effect sensor of the main body; and after the turning off, by the wearable device, the first display screen, and controlling the second display screen to display an image in response to detecting that the back surface of the main body faces upward, the method further comprises:
determining, by the second processor of the wearable device based on the detection signal of the Hall effect sensor, that the front surface of the main body of the wearable device faces upward;
turning off, by the second processor of the wearable device, the second display screen, and waking up the first processor of the wearable device; and
controlling, by the first processor of the wearable device, the first display screen to display an image.

11. The method according to claim 10, wherein
the determining, by the second processor of the wearable device based on the detection signal of the Hall effect sensor, that the front surface of the main body of the wearable device faces upward comprises:
when the second processor of the wearable device determines, based on the detection signal of the Hall effect sensor, that the distance between the main body and the bottom support is the first distance value, determining that the front surface of the main body of the wearable device faces upward.

12. The method according to any one of claims 6 to 11, wherein the method further comprises:
when the first processor of the wearable device determines, based on the detection signal of the Hall effect sensor, that the main body of the wearable device is separated from the bottom support, and the wearable device receives an incoming call, automatically answering, by the wearable device, the incoming call.

13. The method according to any one of claims 6 to 11, wherein
when the first processor of the wearable device determines, based on the detection signal of the Hall effect sensor, that the main body of the wearable device is separated from the bottom support, and the wearable device does not perform the call function, the wearable device automatically starts a camera application or displays a shortcut menu, wherein the shortcut menu comprises one or more of an option for starting a contact list, an option for starting the camera application, and a function option for searching for a surrounding device.

14. The method according to claim 12 or 13, wherein
that the first processor of the wearable device determines, based on the detection signal of the Hall effect sensor, that the main body of the wearable device is separated from the bottom support comprises:
when the first processor of the wearable device determines, based on the detection signal of the Hall effect sensor, that the distance between the main body and the bottom support is greater than or equal to a third distance value, determining, by the first processor of the wearable device, that the main body of the wearable device is separated from the bottom support, wherein the third distance value is greater than the first distance value, and the third distance value is greater than the second distance value.

15. A wearable device, comprising: a main body and a bottom support configured to support the main body, wherein the main body is rotatable relative to the bottom support, a first display screen is disposed on a front surface of the main body, a second display screen is disposed on a back surface of the main body, and power consumption caused when the first display screen displays an image is greater than power consumption caused when the second display screen displays an image; and
the main body further comprises a memory, a first processor, and a second processor, wherein the memory is configured to store computer program code, the computer program code comprises computer instructions, and the first processor or the second processor reads the computer instructions from the memory, to enable the wearable device to perform the method for reducing power consumption of a wearable device according to any one of claims 1 to 14.

16. A computer-readable storage medium, comprising computer instructions, wherein when the computer instructions are run on a wearable device, the wearable device is enabled to perform the method for reducing power consumption of a wearable device according to any one of claims 1 to 14.

17. A computer program product, wherein when the computer program product runs on a wearable device, the wearable device is enabled to perform the method for reducing power consumption of a wearable device according to any one of claims 1 to 14.

18. A chip system, comprising one or more processors, wherein when the one or more processors execute instructions, the one or more processors perform the method for reducing power consumption of a wearable device according to any one of claims 1 to 14.
